# EUROPÄISCHE PATENTANMELDUNG

(11) **EP 1 416 409 A2**
(43) Veröffentlichungstag der Anmeldung: **06.05.2004**
(21) Anmeldenummer: 03024216.8
(22) Anmeldetag: 22.10.2003
(51) Int. Cl.: G06F 17/60

(54) **Anbindung geographischer Lokationsdaten an Internet Marktplätze**

(30) Priorität: 02.11.2002 DE 10251053
(71) Anmelder: Deutsche Telekom AG, 53113 Bonn (DE)
(72) Erfinder: Karge, Ralf, Dipl-Ing., 67055 Ludwigshafen (DE); Leiber, Thomas, 64287 Darmstadt (DE); Scheider, Bernold, Dipl.-Ing., 64732 Bad König (DE)

(57) **Zusammenfassung**

Die Erfindung betrifft ein Verfahren zur ortsabhängigen Übertragung von Informationen an Informationssuchende, mit einer Datenbank, in der ein Suchender digitale Informationen über Interessen ablegen kann, mit einer zweiten Datenbank, in der ein Anbieter digitale Informationen über Angebote ablegen kann, wobei die Angebote mit einer geographischen Markierung versehen sind, mit einem Sende- und Empfangsgerät, insbesondere einem mobilen Telefon oder PDA, über das eine geografische Lokalisierung des Benutzers möglich ist, mit folgenden Schritten:
- Ermitteln der geographischen Position des Interessenten,
- Ermitteln von Anbietern durch Suche in den Datenbanken, die Angebote besitzen, die mit den Interessen übereinstimmen, und die in einem bestimmten Umkreis der geographischen Position des Interessenten liegen,
- Übermitteln von Anbietern und/oder Angeboten, soweit welche gefunden wurden.

## Beschreibung

Die Erfindung betrifft ein Verfahren zur ortsabhängigen Übertragung von Informationen an Informationssuchende. Die Erfindung betrifft insbesondere ein System, das einem Interessenten in Abhängigkeit eines Interessenprofils Informationen zustellt, wenn er sich in einer bestimmten Region bewegt.

### Gebiet der Erfindung:

Oftmals sind Interessen eines Kunden an eine bestimmte Region gebunden. Sollte sich z. B. ein Kunde in der Innenstadt aufhalten, so besteht die Möglichkeit eines Einkaufes für bestimmte Gegenstände. Die Erfindung betrifft ein,Verfahren, um den Anbieter und Interessenten zusammenzuführen. Dies ist insbesondere dann von Interesse, wenn nur bestimmte Dinge von Interesse für den Kunden sind. Eine selektive und regionale Auswahl sollte erfolgen.

### Stand der Technik (SdT):

Aus der Patentschrift DE 100 34 109 ist ein Verfahren bekannt, um einen Kunden zu einem Anbieter zu leiten. Hierbei werden über Markierungen Informationen über die genaue Position vermittelt. Es werden jedoch keine Informationen in Abhängigkeit der Position des Anbieters bzw. Suchenden übermittelt.

### Aufgabe der Erfindung:

Aufgabe der Erfindung ist es, ein Verfahren bereitzustellen, das es ermöglicht, Informationen an einen mobilen Suchenden bereitzustellen in Abhängigkeit der Position des Suchenden.

### Beschreibung der Erfindung:

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet.

Ist ein Interessent bzw. Kunde beim Marktplatzsystem angemeldet, und ist er im Besitz eines mobilen Endgerätes, welches zu einer Positionsbestimmung geeignet ist, kommuniziert ein zentraler Server mit diesem Endgerät. Es werden Informationen übertragen, die nur in der Region für den Kunden interessant sind, in der er sich gerade aufhält.

So meldet sich ein Kunde erstmals beim elektronischen Marktplatz an, um seine Interessen zu definieren. Er informiert sich über die angebotenen Produkte und Produktkategorien, indem er durch die Struktur des Marktplatzes navigiert. Dies erfolgt in der Regel durch einen Web-Browser. Nachdem er Produkte oder Prodüktkategorien bestimmt hat und Informationen, wie Preise bzw. Umgebungen bestimmt hat, definiert er den Kanal, über die er eine Mitteilung erhalten möchte. Dabei kann er per SMS, per E-Mail, per Fax oder per Voice Angebote erhalten. Weiterhin gibt er an, wie er räumlich zu ermitteln sein soll. Entweder über die Ortsbestimmung seines GSM Handys, indem er die Telefonnummer angibt oder durch Übermittlung von GPRS Informationen, die regelmäßig durch ein Zusatzprogramm von seinen mobilen Begleitern übermittelt werden. Dieses Zusatzprogramm wird vom Anbieter der Dienstleistung bereitgestellt. Es überträgt in regelmäßigen Abständen Informationen über die Position des Interessenten, die vorzugsweise signiert sind, sodass eine Manipulation ausgeschlossen ist. Bei der Verwendung von GSM mobilen Geräten erfolgt eine Dreieckspeilung mit den bekannten Verfahren. Hierbei kann der Benutzer durch einen speziellen Code, der z. B. als SMS versandt werden kann, die Angaben der Position an- und abschalten.

Dadurch, dass der Benutzer nun räumlich lokalisiert werden kann, ist der Benutzer auch am PC bei der Suche auf dem Angebotsportal in der Lage zu erkennen, welche Produkte in seiner räumlichen Umgebung angeboten werden. Die Lokalisierungsinformationen werden hierbei über ein Web-Portal angezeigt und können als Suchkriterium zur Suche von Angeboten interaktiv verwendet werden.

Falls der Nutzer kein Produkt finden sollte, welches ihm zusagt, oder weil einige Produktattribute nicht mit seinen Wünschen übereinstimmen, hat er die Möglichkeit, einen Produktwunsch im System einzustellen. Er hat zudem noch die Möglichkeit anzugeben, wie und über welche Kanäle er unterrichtet werden möchte, wenn ein Produkt eingestellt wird, das genau seinen Vorstellungen entspricht. Er kann sich beispielsweise eine E-Mail, ein Fax oder SMS senden lassen oder sich automatisch anrufen lassen.

Der Kunde wird auf Wunsch ebenfalls informiert, wenn er sich in der Nähe eines Händlers mit einem entsprechenden Produktangebot befindet.

Der Kunde erhält die Möglichkeit, neben den vorher beschriebenen Funktionalitäten genau zu steuern, welche expliziten Werbebotschaften er empfangen möchte. Er kann dabei sowohl einstellen, über welche Kanäle er Werbung empfangen möchte, als auch die Anzahl der zu empfangenen Werbebotschaften für jeden Kanal begrenzen. Das bedeutet, dass jeder Kunde nur soviel Werbung erhält, wie er wirklich wünscht.

Will ein Anbieter den elektronischen Marktplatz nutzen, muss er sich registrieren lassen. Er stellt Produkte ein, die er in seinem Geschäft bzw. online verkauft. Bevor er ein Produkt einstellt oder neu bepreist, sieht er sich die Produktwünsche der Kunden anonymisiert an und entscheidet auf dieser Grundlage die Preisgestaltung. Des weiteren kann er über die Produktwünsche potentieller Kunden seine Produktpalette, ggf. auch regional beeinflusst, optimal an die Nachfrage anpassen.

Der Anbieter hat über die Marktplatzfunktionalitäten hinaus die Möglichkeit, Werbeaktionen zu starten. Hierbei gibt er beispielsweise einen Werbetext in ein dafür vorgesehenes Fenster ein und stellt die Produkte für die Marketingaktion zusammen. Der Anbieter kann sich anzeigen lassen, wie viele Kunden über welche Kanäle seine Werbebotschaft empfangen werden oder bereits empfangen haben.

Je attraktiver die Angebote bei solchen Aktionen sind (z. B. Preisnachlässe oder Voucher), desto größer wird die Bereitschaft der Kunden, Werbenachrichten zuzulassen bzw. die zu empfangende Anzahl zu erhöhen.

Die Architektur des Systems besteht in einer vorteilhaften Ausführungsform im Wesentlichen aus zwei großen Teilen. Zum einen aus dem Marktplatzserver, der unter anderem auch für die Marketingdatenbank zuständig ist, und zum anderen aus dem Mobilserver, der das Geo-Tracking über den Mobilfunk-Carrier des Kunden übernimmt, soweit der Benutzer nicht eigenständig Informationen durch sein GPS System sendet.

Als Ausgabekanäle werden für Push-Dienste (Produktmatches) insbesondere E-Mail, Fax, SMS, Voicemail verwendet. Es sind jedoch auch andere Formen denkbar, die z. B. über einen Internetbrowser funktionieren, insbesondere durch Verwendung von bekannten Push-Diensten.

### Im Folgenden wird auf einige Push-Dienste eingegangen:

E-Mail: Der Kunde bzw. Suchende erhält eine E-Mail, wenn ein Anbieter ein Produkt einstellt, das seinen Wünschen (Produktattribute) entspricht und wenn in den Benachrichtigungsoptionen eine E-Mail verlangt wird. In der E-Mail kann sowohl ein Hyperlink zur direkten Ansicht des Produktes (ohne Anmelden beim System) enthalten sein sowie erste Produktbeschreibungen und Informationen über den Standort des Anbieters. Produktinformationen, ggf. in multimedialer Form, muss der Anbieter liefern. Der Anwender ist in der Lage, die Form der E-Mail zu bestimmen. Wenn der Kunde in den Benachrichtigungsoptionen auch die Option Routenplaner angeklickt hat,' so enthält die E-Mail einen Routenplan vom Wohnort des Kunden zum Standort des Anbieters als Anhang. So kann er entscheiden, ob die E-Mail aufwändig oder weniger aufwändig gestaltet ist. Dies hängt in der Regel davon ab, mit welchem Gerät er E-Mails empfängt.

Fax: Der Kunde erhält ein Fax, wenn ein Anbieter ein Produkt einstellt, das seinen Wünschen (Produktattribute) entspricht und wenn in den Benachrichtigungsoptionen ein Fax verlangt wird. In dem empfangenen Fax sind erste Produktinformationen sowie Informationen über den Standort des Anbieters enthalten. Wenn der Kunde in den Benachrichtigungsoptionen auch die Option Routenplaner angeklickt hat, so enthält das Fax einen Routenplan vom Wohnort des Kunden zum Standort des Anbieters.

SMS: Der Kunde erhält eine SMS, wenn ein Anbieter ein Produkt einstellt, das seinen Wünschen (Produktattribute) entspricht und wenn in den Benachrichtigungsoptionen eine SMS verlangt wird. Bei diesem Ausgabekanal sind in dieser Kurznachricht erste Produktinformationen sowie der Standort (Adresse) des Anbieters enthalten. Bei diesem Ausgabekanal gibt es zusätzlich die Möglichkeit, LBS zu nutzen (siehe Abschnitt 3). Das bedeutet, dass der Kunde auch informiert wird, wenn er sich in der Nähe des Standortes des Anbieters befindet. Durch eine Antwort-SMS kann dann eine Produktbestellung ausgeführt werden.

Voice: Der Kunde erhält einen Anruf , wenn ein Anbieter ein Produkt einstellt, das seinen Wünschen (Produktattribute) entspricht und wenn in den Benachrichtigungsoptionen ein Anruf verlangt wird. Bei diesem Ausgabekanal gibt es als Benachrichtigungsoption noch zusätzlich die Möglichkeit, LBS zu nutzen (siehe Abschnitt 3). Das bedeutet, dass der Kunde auch informiert wird, wenn er sich in der Nähe des Standortes des Anbieters befindet. Die Voicenachricht enthält Produktinformationen und Informationen über den Standort des Anbieters. Zusätzlich hat der Kunde hier noch die Möglichkeit, sich die Nachricht wiederholen lassen. Weiterhin kann der Kunde die Nachricht speichern und sich diese zu einem späteren Zeitpunkt anhören, falls er diese nicht richtig verstanden haben sollte oder wenn eine andere Person abgehoben hat, für die diese Nachricht nicht bestimmt war. Auf Kundenwunsch kann direkt eine Sprachverbindung zu einem call center oder zum Marktplatzserver aufgebaut werden.

Im Folgenden wird auf die Eingabegeräte eingegangen.

Die Eingabegeräte sind für den Anbieter zur Pflege des Produktangebots und zum Durchführen von Marketingaktionen gedacht, während Kunden sich über das Produktangebot informieren, Produktwünsche und Benachrichtigungsoptionen einstellen oder die Kenngrößen für Werbebotschaften angeben können.

Computer (PC): Über dieses Eingabegerät kann der Anbieter seine Produkte einstellen oder die Produktattribute verändern. Weiterhin startet er die Werbungsaktionen über dieses Gerät. Der Kunde hat die Möglichkeit, sich über das Produktangebot zu informieren, seine Produktwünsche und die dazugehörigen Benachrichtigungsoptionen einzustellen und die Kenngrößen für Werbebotschaften anzugeben.

PDA (Personal Digital Assistant): Über dieses Eingabegerät hat der Kunde bzw. Interessent die Möglichkeit, sich über das Produktangebot auf dem Marktplatz zu informieren. Weiterhin kann er Produktwünsche und die dazugehörigen Benachrichtigungsoptionen einstellen.

Telefon (Mobil oder Festnetz): Über dieses Eingabegerät kann sich der Kunde über das Prodüktangebot über eine dafür speziell ausgelegte Produktsuche informieren. Wenn der Kunde Voicemessages von Produktinformationen gespeichert hat, so kann er diese abrufen.

In einer weiteren Ausführungsform kann das System die Geokoordinaten der Postanschriften sowohl des Kunden als auch des Anbieters verwenden, soweit beide Teilnehmer dies wünschen. So können nur Radien ausgehend von der Postanschrift des Kunden berechnet werden. Wenn innerhalb dieser Reichweite ein Produkt eingestellt wird, das dem Produktwunsch des Kunden entspricht, so wird er entsprechend informiert. Hier wird es bereits für den Anbieter möglich sein, Werbeaktionen zu starten.

Bei einer aktiven Lokalisierung des Kunden kann dies über ein WAP Portal erfolgen. Jeder Kunde kann sich somit jederzeit über ein WAP Portal, auf dem ein WAP Link zum System besteht, lokalisieren lassen. Es wird dann überprüft, ob sich der Kunde in der Nähe eines Anbieters befindet. Ist dies der Fall, wird der Kunde über die entsprechenden Ausgabekanäle über das Produkt informiert. In einer alternativen Ausführungsform kann die Lokalisierung per SMS angestoßen werden.

Besitzt das Endgerät einen GPS Empfänger, so können durch eine permanent auf dem Endgerät installierte Applikation die entsprechenden Daten an das CiA System gesendet werden.

Ohne eine vom Nutzer ausgehende Aktion ist das System somit ständig über den Standort des Kunden informiert und sendet diesem eine Produktmeldung über die entsprechenden Ausgabekanäle zu, wenn er sich in der Nähe eines Anbieters befindet.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:

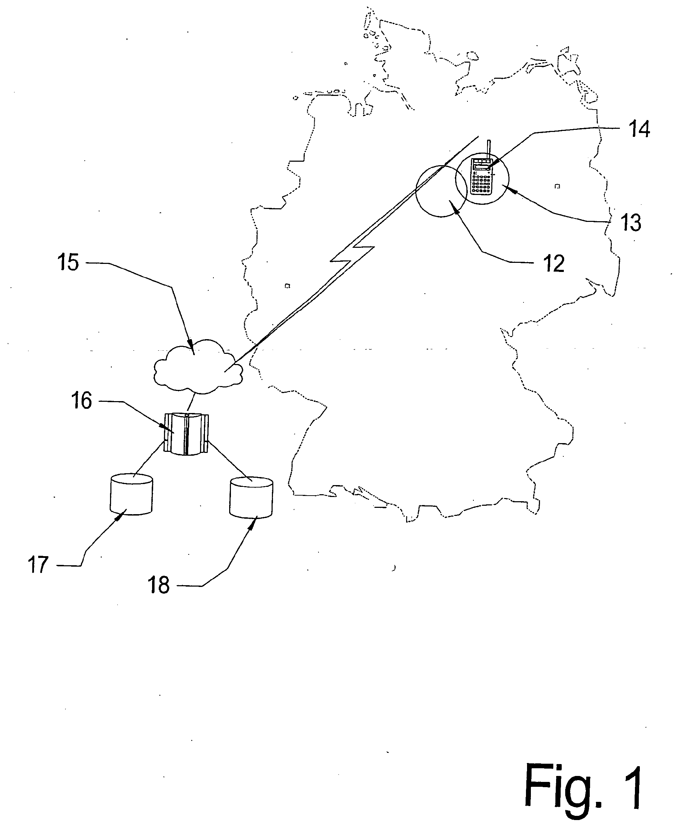

- Fig. 1: die regionale Umgebung eines Anbieters und die Interessenregion eines Suchenden, der über ein mobiles Endgerät mit einem Server verbunden ist.

Die Figur 1 zeigt eine geografische Übersicht, wobei ein Anbieter, der sich durch einen Umkreis 12 regional definiert im Schnittbereich des Empfangs eines Benutzers 13 ist, der mit einem mobilen Endgerät 14 versehen ist. Das mobile Endgerät 14 ist wiederum über ein kabelloses Netzwerk 15 mit einem Server 16 verbunden. Der Server 16 verwaltet einerseits die Anbieterinformationen (17) und andererseits die Informationen der Informationssuchenden (18). Auf diesen beiden Datenbanken (17, 18) wird ständig ein Abgleich gefahren, wobei überprüft wird, ob eine Schnittmenge zwischen Anbietenden und Suchenden vorhanden ist. Diese Schnittmengen definiert sich einerseits über die geografischen Informationen und andererseits über die Informationen, aus denen ersichtlich ist, welche Produkte gesucht werden und welche angeboten werden. Falls diese Kriterien übereinstimmen, so werden Angebote an den mobilen Endbenutzer übermittelt.

### Bezugzeichenliste

- 12: Anbieter mit regionalem Umkreis
- 13: Benutzer
- 14: mobiles Endgerät
- 15: kabelloses Netzwerk
- 16: Server
- 17: Datenbank mit Anbieterinformationen
- 18: Datenbank mit Informationen der Informationssuchenden

## Patentansprüche

1. Verfahren zur ortsabhängigen Übertragung von Informationen an Informationssuchende,
mit einer,Datenbank, in der ein Suchender digitale Informationen über Interessen ablegen kann,
mit einer zweiten Datenbank, in der ein Anbieter digitale Informationen über Angebote ablegen kann, wobei die Angebote mit einer geographischen Markierung versehen sind,
mit einem Sende- und Empfangsgerät, insbesondere einem mobilen Telefon oder PDA, über das eine geografische Lokalisierung des Benutzers möglich ist, mit folgenden Schritten:
- Ermitteln der geographischen Position des Interessenten,
- Ermitteln von Anbietern durch Suche in den Datenbanken, die Angebote besitzen, die mit den Interessen übereinstimmen, und die in einem bestimmten Umkreis der geographischen Position des Interessenten liegen,
- Übermitteln von Anbietern und/oder Angeboten, soweit welche gefunden wurden.

2. Verfahren nach dem vorhergehenden Anspruch, **dadurch gekennzeichnet, dass** die Ermittlung der geographischen Position des Interessenten automatisch durch Übertragen von GSM Lokalisierung und/oder GPS-Positionen erfolgen kann.

3. Verfahren nach einem oder mehreren der vorhergehenden Ansprüche, **dadurch gekennzeichnet, dass** die geographische Position durch interaktives Auslösen übertragen wird.

4. Verfahren nach einem oder mehreren der vorhergehenden Ansprüche, **dadurch gekennzeichnet, dass** die Angebote/Informationen per SMS und/oder per E-Mail und/oder per Voice übertragen werden.

5. Verfahren nach dem vorhergehenden Anspruch, **dadurch gekennzeichnet, dass** die vollständigen Angebotsinformationen und/oder ein Link auf die Angebotsinformationen übertragen werden.

6. Verfahren nach einem oder mehreren der vorhergehenden Ansprüche, **dadurch gekennzeichnet, dass** ein Kaufabschluss über das mobile Endgerät möglich ist.

7. Verfahren nach einem oder mehreren der vorhergehenden Ansprüche, **dadurch gekennzeichnet, dass** die Informationen Angaben über Interessen, die Größe des Standortumkreises, den Preis, das Produkt und/oder die Produktart enthalten.

8. Verfahren nach einem oder mehreren der vorhergehenden Ansprüche, **dadurch gekennzeichnet, dass** ein Anbieter die Dauer seines Angebots bestimmt.

9. Software für einen Computer, **dadurch gekennzeichnet, dass** ein Verfahren nach einem oder mehreren der vorhergehenden Ansprüche implementiert ist.

10. Datenträger für einen Computer, **gekennzeichnet durch** die Speicherung einer Software nach dem vorhergehenden Softwareanspruch.

11. Computersystem, **gekennzeichnet durch** eine Einrichtung, die den Ablauf eines Verfahrens nach einem oder mehreren der vorhergehenden Verfahrensansprüche erlaubt.

12. Serversystem zur ortsabhängigen Übertragung von Informationen an Informationssuchende,
mit Mitteln für eine Datenbank, in der ein Suchender digitale Informationen über Interessen ablegen kann, mit Mitteln für eine zweite Datenbank, in der ein Anbieter digitale Informationen über Angebote ablegen kann, wobei die Angebote mit einer geographischen Markierung versehen sind,
mit einer Schnittstelle, über die Benutzerdaten und die geografische Lokalisierung des Benutzers empfangen werden, mit einer Bearbeitungseinheit, die folgende Schritte ausführt:
- Empfangen von geografischen Lokalisierungsdaten und Benutzerdaten von Interessenten,
- Ermitteln von Anbietern durch Suche in den Datenbanken, die Angebote besitzen, die mit den Interessen übereinstimmen, und die in einem bestimmten Umkreis der geographischen Position des Interessenten liegen,
- Übermitteln von Anbietern und/oder Angeboten, soweit welche gefunden wurden.

13. Clientsystem zur Kommunikation mit einem Serversystem nach dem vorhergehenden Anspruch, **dadurch gekennzeichnet, dass** kontinuierlich Lokalisierungsdaten an die Schnittstelle des Serversystems übertragen werden, aufgrund derer Angebote ermittelt und übertragen werden.
